# EUROPEAN PATENT APPLICATION

(11) **EP 1 895 528 A2**
(43) Date of publication of application: **05.03.2008**
(21) Application number: 07016351.4
(22) Date of filing: 21.08.2007
(51) Int. Cl.: G11B 7/135

(54) **Optical pickup device**

(30) Priority: 24.08.2006 JP 2006227908
(71) Applicant: Funai Electric Co., Ltd., Daito-shi, Osaka 574-0031 (JP)
(72) Inventor: Nishioka, Ken, Daito-shi Osaka 574-0013 (JP); Fujii, Hitoshi, Daito-shi Osaka 574-0013 (JP); Nagashima, Kenji, Daito-shi Osaka 574-0013 (JP)
(74) Representative: Beetz & Partner

(57) **Abstract**

An optical pickup device includes a spherical aberration compensating element which can compensate the spherical aberration of a light beam for a BD or a CD, and a phase shift element which can compensate the spherical aberration of a light beam for a DVD. In the spherical aberration compensating element, a first region which can compensate the spherical aberration of a light beam for a CD by diffraction and diffusion, and a second region which is formed to surround the first region and can compensate the spherical aberration of a light beam for a BD by changing phase distribution, are formed. Functions of the first region and the second region can be electrically controlled in ON - OFF manner.

## Description

### BACKGROUND OF THE INVENTION

### Field of the Invention

The present invention relates to an optical pickup device that projects a light beam to an optical recording medium so that information can be recorded and reproduced. In particular, the present invention relates to an optical pickup device which is compatible with three kinds of optical recording media utilizing light beams having different wavelengths.

### Description of Related Art

Recently, optical recording media including a compact disc (hereinafter referred to as "a CD") and a digital versatile disc (hereinafter referred to as "a DVD") have become commonplace and widely available. Further, in order to increase a quantity of information recorded on the optical recording medium, researches to realize higher recording density of the optical recording medium have been carried on. As a result, a high density optical recording medium such as a Blu-ray Disc (Registered Trademark ;hereinafter referred to as "a BD") or a High Definition DVD (HD DVD) is being available in the market, for example. Hereinafter, these optical recording medium may be called generically as a high density optical recording medium.

When such an optical recording medium is reproduced or recorded, an optical pickup device is generally used that projects a light beam to the optical recording medium so that information can be reproduced or recorded on the medium. Depending on a kind of the optical recording medium, a numerical aperture (NA) of an objective lens and a wavelength of a light source become different. It is related to a fact that recording density of the optical recording medium is decided by a spot size of the light beam which is condensed on the optical recording medium. It is necessary to enlarge the NA and to shorten the wavelength in order to get smaller spot size for the higher recording density.

Here, the numerical aperture and the wavelength are described about a CD, a DVD, and a BD as examples, the NA of 0.50 and the wavelength of 780 nm are used for a CD, the NA of 0.65 and the wavelength of 650 nm are used for a DVD, and the NA of 0.85 and the wavelength of 405 nm are used for a BD, for example.

As above described, depending on the kind of the optical recording medium, because the numerical aperture of the objective lens and the wavelength of the light source which are utilized become different, it is conceivable to use different optical pickup device for every different optical recording medium. However, it is more convenient that one optical pickup device can perform reproducing and recording a plurality of kinds of optical recording media, and many of such an optical pickup device are already developed which can be compatible with a plurality of kinds of the optical recording media. There is an optical pickup device having one objective lens condensing the light beam emitted from the light source on the optical recording medium in such optical pickup devices, in consideration of an assembly convenience and a miniaturization of the device and the like.

In the meantime, when an optical pickup device having only one objective lens support a plurality of kinds of optical recording media, a spherical aberration is generated in an optical system of the optical pickup device because thickness of a transparent cover layer which protects the recording layer is different depending on the kind of the optical recording medium. As a result, this spherical aberration is compensated by that a spherical aberration compensating element is disposed in the optical system of the optical pickup device which can compensate the spherical aberration, or a structure of a finite optical system is introduced which makes the light beam emitted from the light source entering into the objective lens as divergent rays or a convergent rays and the like, in conventional technology.

For example, in JP-A-2003-207714 an optical pickup device which can record on and / or reproduce from three kinds of optical recording media compatibly by only one objective lens, is proposed. The optical pickup device includes the objective lens which is designed for use of the high density optical disc and includes a first phase compensator which compensates only phase of the light beam for a DVD and passes the light beams for a high density optical disc or a CD without phase change, and a second phase compensator which compensates only phase of light beam for a CD and passes the light beams for a high density optical disc or a DVD without phase change, and has the compatibility with a high density optical disc, a DVD, and a CD. Here, the first and second phase compensators correspond to the spherical aberration compensating element above described.

Further, in JP-A-2004-246931 an optical pickup device which has compatibly with three kinds of optical recording discs which are a high density optical disc, a DVD and a CD by only one objective lens, is proposed. The optical pickup device includes the objective lens which is designed to have the smallest wavefront of the spherical aberration when the light beam for a high density optical disc is incident on the objective lens with an infinite optical system , and phase compensation element (spherical aberration compensating element) which can secure enough phase compensation for light beam having the wavelength of 660 nm (for DVD) and which does not perform any unnecessary action for light beam having the wavelength of 407 nm (for high density optical disc) and wavelength of 780 nm (for CD) by selectivity for wavelength having blind sector at these wavelengths due to selection of glass material and height of rectangle grooves. The optical pickup device has a structure of finite system incidence in which the spherical aberration is changed by conversion of incident light beam having the wavelength of 780 nm at the objective lens to light beam in a predetermined divergent state by means of a coupling lens.

Further, in JP-A-2006-073076 and JP-A-2005-322301 it is reported that an optical pickup device which can be compatible with three kinds of optical recording media which are a high density optical disc, a DVD and a CD by only one objective lens can be provided. The optical pickup device has a structure which is formed on a surface of an element that is disposed before the objective lens and has a function as an aperture limiter. The structure functions as a diffraction grating and enables compensation of the spherical aberration by generating diffraction light for a plurality of light beam having different wavelength which pass through the above described element. Here, in JP-A-H10-092000 a technology is disclosed by which spherical aberration can be compensated by disposing a liquid crystal hologram in an optical path and by utilizing a diffraction function of the liquid crystal hologram to improve utilization efficiency of the light beam for the optical pickup device which can be compatible with only two kinds of the optical recording media.

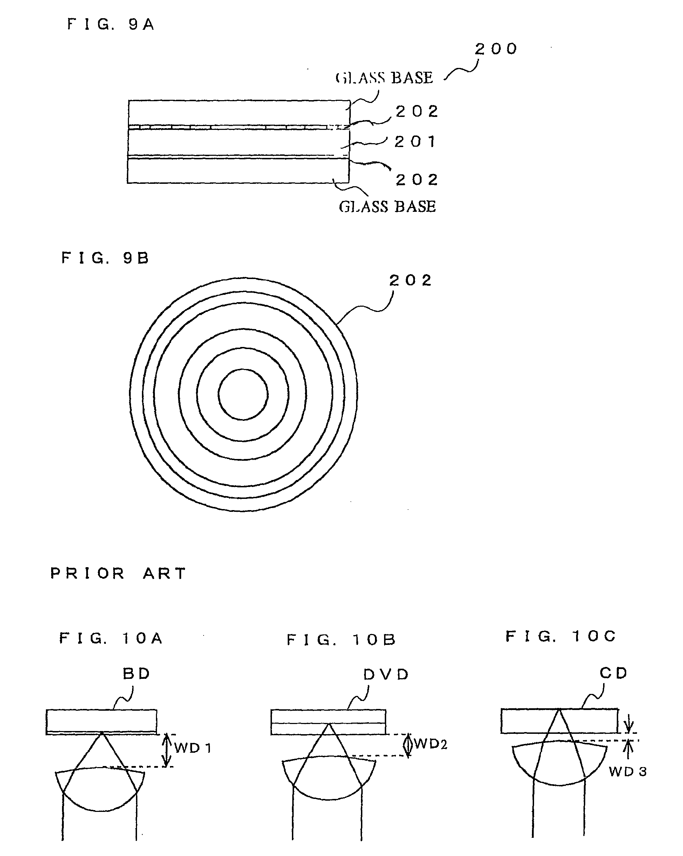

However, in the structure disclosed in JP-A-2003-207714 when a CD is reproduced or the like where thickness of a transparent cover layer is thicker and focal distance to the recording layer becomes the longest, working distance WD3 which is length between a tip of the objective lens and the optical recording medium becomes very short as shown in Fig. 10A to Fig. 10C (WD1 > WD2 > WD3), because the objective lens is designed suitably for the high density optical disc which requires large numerical aperture and the light beam emitted from each of the light source is incident on the objective lens with an infinite optical system in which the light beam enters into the objective lens in a parallel situation. Therefore, it causes a problem that possibility of collision between the optical recording medium and the objective lens becomes high.

In this regard, the working distance when a CD is reproduced or the like can be expanded in a structure in which the light beam having the wavelength of 780 nm for a CD is incident on the objective lens with a finite optical system by adjustment of a coupling lens that is disposed outside of common optical system for the three kinds of light beams having different wavelengths near by the light source as disclosed in JP-A-2004-246931. Here, in a finite optical system, divergent rays enter into objective lens. In this case, there is a problem that a quality of reproducing information and the like by the optical pickup device becomes damaged due to generation of large coma aberration when the objective lens is shifted for tracking control and the like (hereinafter, this may be simply referred to as "lens shift").

In the structure disclosed in JP-A-2006-073076 and JP-A-2005-322301, in that an element which is composed of a transparent member on which the diffraction grating is formed, is disposed before the objective lens and the element is formed to move with the objective lens as one body at the lens shift, it becomes possible to solve problem of the spherical aberration for respective optical recording media at the same time to solve the problems that the coma aberration described above is generated, and that the working distance becomes very short when a CD is reproduced or the like. However, in a case where the diffraction grating is formed on the transparent member, and is disposed in the optical system of the optical pickup device, there is a problem that the light transmittance is made decrease for the light beam having the wavelength which is arranged to pass through the member inherently without being diffracted when the light beam passes through the member. As a result, it causes a problem on efficiency of optical transmission of the optical pickup device.

It is possible to improve the efficiency of optical transmission and to compensate the spherical aberration when the liquid crystal hologram is utilized as disclosed in JP-A-H10-092000. However, the structure disclosed in JP-A-H10-092000 has the compatibility only with two kinds of the optical recording media, and to utilize this for the three kinds of the optical recording media, it is necessary to dispose a plurality of the liquid crystal holograms, and it causes a problem that number of parts is made increase.

### SUMMARY OF THE INVENTION

In view of the above described problems, it is an object of the present invention to provide an optical pickup device which has the compatibility with three kinds of the optical recording media, in that the efficiency of optical transmission is improved, increase of number of parts which are disposed in the optical system is suppressed, and possibility of collision between the objective lens and the optical recording medium is decreased.

To attain the above described object, the present invention is characterized by that an optical pickup device includes: light sources which emit light beams having wavelengths of λ1, λ2, and λ3 (λ1 > λ2 > λ3); an objective lens which condenses the light beam emitted from the light source on a recording surface of an optical recording medium; and a spherical aberration compensating portion which is disposed between the light source and the objective lens to perform compensation of spherical aberration; and in the optical pickup device, the spherical aberration compensating portion is composed by a first aberration compensating element to perform the spherical aberration generated in the light beam having the wavelength of λ1 and λ3, and a second aberration compensating element to perform the spherical aberration generated in the light beams having the wavelengths of λ2, the first compensating element has a first region which outputs the light beam having the wavelength of λ1 as divergent rays having a predetermined divergent angle, and a second region which is formed to surround the first region and changes phase distribution of the light beam having the wavelength of λ3 when the light beam having the wavelength of λ3 enters, and the element can electrically control functions that are performed by the first region and the second region in ON - OFF manner.

By this structure, unnecessary decrease in the light transmittance can be suppressed because the first aberration compensating element has a structure which can electrically control the aberration compensating function in ON - OFF manner, therefore, improvement of the efficiency of optical transmission in the optical pickup device. Further, because the first aberration compensating element can compensate the spherical aberration of the light beams having two kinds of different wavelengths, increase of number of parts which is disposed in the optical system of the optical pickup device can be suppressed.

Further, a compensating method of the spherical aberration in an inner region among two spherical aberration compensating regions which are arranged in the first aberration compensating element, cancels the spherical aberration by entering divergent rays having a predetermined angle into the objective lens. As a result, when a CD is recorded and reproduced in which its effective diameter is the smallest and the focal distance is set in the farthest in the optical pickup device having the compatibility with a BD, a DVD, and a CD, for example, the working distance (WD) which is length between a tip of the objective lens and the optical recording medium can be enlarged in comparison with the case where the spherical aberration is compensated by changing the phase distribution of the light beam. Therefore, it becomes possible to reduce the possibility of collision between the objective lens and the optical recording medium.

It is preferable in the optical pickup device according to the present invention, structured as above described, that the first aberration compensating element is composed of a liquid crystal element including a liquid crystal and a first transparent electrode and a second transparent electrode which are disposed to sandwich the liquid crystal, the first region and the second region are formed by that an electrode pattern formed in at least one of the first transparent electrode and the second transparent electrode is made in two kinds of patterns, the electrode pattern is a concentric interference pattern in the first region, and the light beam having the wavelength of λ1 is diffracted and output as the divergent rays when voltages are applied between the first transparent electrode and the second transparent electrode, and the electrode pattern is formed to have a plurality of concentric regions in the second region, adjustment of the applied voltages is made possible between the first transparent electrode and the second transparent electrode at each region of the plurality of regions and the phase distribution of the light beam having the wavelength of λ3 is changed by the adjustment of the applied voltages.

By this structure because the first aberration compensating element is a liquid crystal element, the first aberration compensating element can be easily realized which can electrically control the aberration compensating function in ON - OFF manner.

Further, it is preferable in the optical pickup device according to the present invention, structured as above described, that the second aberration compensating element has a plurality of phase shift regions to change the phase distribution of the light beam having the wavelength of λ2 and does not change the phase distribution of the light beams having the wavelength of λ1 and λ3.

By this structure because compensation of the spherical aberration generated in the light beam having the wavelength of λ2 by the second aberration compensating element is based on a change of the phase distribution, it can prevent to the utmost decrease of the light transmittance at the second aberration compensating element in comparison with a case where a structure is employed to compensate the spherical aberration by diffraction. As a result, the efficiency of optical transmission in the optical pickup device can be improved.

Further, it is preferable in the optical pickup device according to the present invention, structured as above described, that the second aberration compensating element is made of a transparent member and the plurality of phase shift regions are made by changing thickness of the transparent member in a staircase pattern.

By this arrangement weight of the second aberration compensating element can be reduced and assembling of the element in the optical pickup device is easy because wirings are not necessary in comparison with a case where the phase shift regions are formed by the liquid crystal for example.

Further, it is preferable in the optical pickup device according to the present invention, structured as above described, that a function which selectively performs limitation of aperture on the light beam having the wavelength of λ2 is arranged in an outer peripheral side of the second aberration compensating element.

By this arrangement a structure of the optical system of the optical pickup device becomes simple because there is no need to dispose aperture limiting filter separately.

Further, it is preferable in the optical pickup device according to the present invention, structured as above described, that the optical pickup device further includes an actuator which drives the objective lens at least in focusing direction and tracking direction and the actuator drives the objective lens, the first aberration compensating element, and the second aberration compensating element as one body.

By this arrangement generation of the coma aberration can be easily suppressed because the objective lens, the first aberration compensating element, and the second aberration compensating element can be driven as one body by the actuator.

### BRIEF DESCRIPTION OF THE DRAWINGS

Fig. 1 is a schematic diagram to show one example of structure of an optical system of optical pickup device according to the present embodiment.
Fig. 2A is a schematic plan view to show a structure of a phase shift element which is included in the optical pickup device according to the present embodiment.
Fig. 2B is a cross sectional view when cut along the line B - B shown in Fig. 2A.
Fig. 3 is a cross sectional view to show one example of a spherical aberration compensating element which is included in the optical pickup device according to the present embodiment.
Fig. 4A is a plan view of the spherical aberration compensating element shown in Fig. 3 when viewed from below.
Fig. 4B is a plan view of the spherical aberration compensating element shown in Fig. 3 when viewed from above.
Fig. 5A is a plan view to show a structure of a first region of the spherical aberration compensating element according to the present embodiment when viewed from a second transparent electrode side.
Fig. 5B is a cross sectional view to show a structure of the first region of the spherical aberration compensating element according to the present embodiment when cut along the line A - A shown in Fig. 5A.
Fig. 6 is a schematic diagram to show a situation where a light beam which enters into the spherical aberration compensating element according to the present embodiment is diffracted and output as divergent rays.
Fig. 7A is an explanatory diagram to explain compensation of the spherical aberration which is performed by the second region of the spherical aberration compensating element according to the present embodiment.
Fig. 7B is an explanatory diagram to explain compensation of the spherical aberration which is performed by the second region of the spherical aberration compensating element according to the present embodiment.
Fig. 8A is a diagram to show a situation where a light beam is condensed on the optical recording medium in the optical pickup device according to the present invention when the optical recording medium is a BD.
Fig. 8B is a diagram to show a situation where a light beam is condensed on the optical recording medium in the optical pickup device according to the present invention when the optical recording medium is a DVD.
Fig. 8C is a diagram to show a situation where a light beam is condensed on the optical recording medium in the optical pickup device according to the present invention when the optical recording medium is a CD.
Fig. 9A is a diagram to show one example of variation of the second aberration compensating element which is included in the optical pickup device according to the present embodiment.
Fig. 9B is a diagram to show the example of variation of the second aberration compensating element which is included in the optical pickup device according to the present embodiment.
Fig. 10A is a diagram to explain a problem when a spherical aberration compensating element in the conventional technology is utilized.
Fig. 10B is a diagram to explain a problem when a spherical aberration compensating element in the conventional technology is utilized.
Fig. 10C is a diagram to explain a problem when a spherical aberration compensating element in the conventional technology is utilized.

### DETAILED DESCRIPTION OF THE PREFERRED EMBODIMENTS

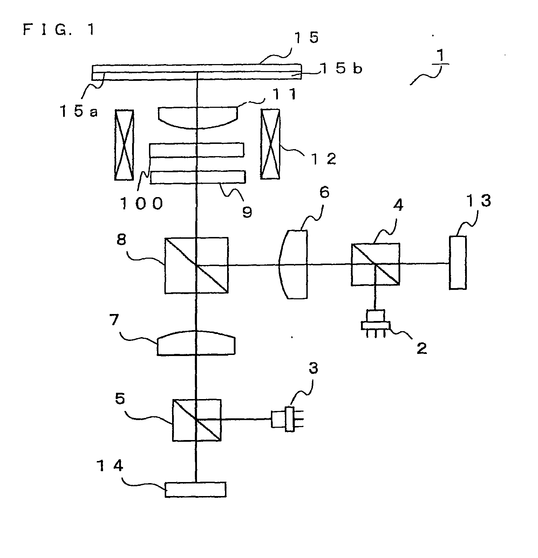

Hereinafter, contents of the present invention will be described in detail with reference to the attached drawings. However, the embodiments described here are merely examples, and the present invention is not limited to the embodiments described here. Fig. 1 is a schematic diagram to show one embodiment of an optical system of optical pickup device according to the present invention. The optical pickup device 1 according to the present embodiment is designed to be compatible with optical recording media such as a BD, a DVD, and a CD.

The optical pickup device 1 is equipped with a first light source 2 which is two wavelength combination type that can emit a light beam having the wavelength of 780 nm for a CD or a light beam having the wavelength of 650 nm for a DVD, a second light source 3 that can emit a light beam having the wavelength of 405 nm for BD, a first beam splitter 4 and a second beam splitter 5 which reflect the light beam emitted from the light sources 2, 3, pass through the reflected light beam reflected by the optical recording medium 15 (CD, DVD, or BD) and direct the light beam to photo detectors 13, 14, respectively, a first collimator lens 6 and a second collimator lens 7 which convert the incident light beam into parallel rays, a dichroic prism 8 which reflects the light beam for a CD or a DVD and passes through the light beam for a BD, a phase shift element 9 (a second aberration compensating element) whose detailed structure will be described later that enables the light beam for a DVD to be changed phase distribution and to compensate the spherical aberration and that passes through the light beam for a CD or a BD without performing any action, a spherical aberration compensating element 100 (a first aberration compensating element) whose detailed structure will be described later that performs the spherical aberration compensation on the light beams for a CD and a BD by ON - OFF control of its function and performs nothing on the light beam for a DVD, an objective lens 11 which condenses the incident light beam on a recording surface 15a of the optical recording medium 15, a first photo detector 13 which converts received reflected light from a CD or a DVD (optical recording medium) 15 into electric signal, and a second photo detector 14 which converts received reflected light from a BD (optical recording medium) 15 into electric signal.

In the optical pickup device 1 in this embodiment, the objective lens 11 is designed such that it is most suitable when it performs reproducing or the like of information of a BD. In such a case, the spherical aberration is generated when it performs reproducing or the like of information from a DVD or a CD which has different thickness of a transparent cover layer 15b of the optical recording medium 15. As a result, in the optical pickup device 1 it is necessary that the spherical aberration compensation can be performed when information of a DVD or a CD is reproduced or the like. Further, as for a BD, because an influence of the spherical aberration generated by variation or the like of thickness of the transparent cover layer 15b is large, a structure in which compensation value of the spherical aberration can be changed properly, is preferable. In consideration for this point, the optical pickup device 1 is designed.

Here, in the present embodiment the objective lens 11 is designed such that it is most suitable when it performs reproducing or the like of information from a BD. However, design of the objective lens 11 is not necessarily limited to a structure of the present embodiment because there is a case that the spherical aberration must be compensated for a BD, a DVD, or a CD the same as the present embodiment even when the objective lens is not designed as above described.

The objective lens 11, the spherical aberration compensating element 100, and the phase shift element 9 are designed such that they can be driven as one body by means that they are disposed on an actuator 12 which drives the objective lens 11 at least in focusing direction and tracking direction. Structure of the actuator 12 as described here are well known structure in which they are driven by electromagnetic force between permanent magnets and coils, therefore, detailed explanation for them is omitted. Here, the reason that they are driven as one body is to reduce influence of coma aberration because there is a possibility that generation of the coma aberration becomes high when only the objective lens 11 is driven solely.

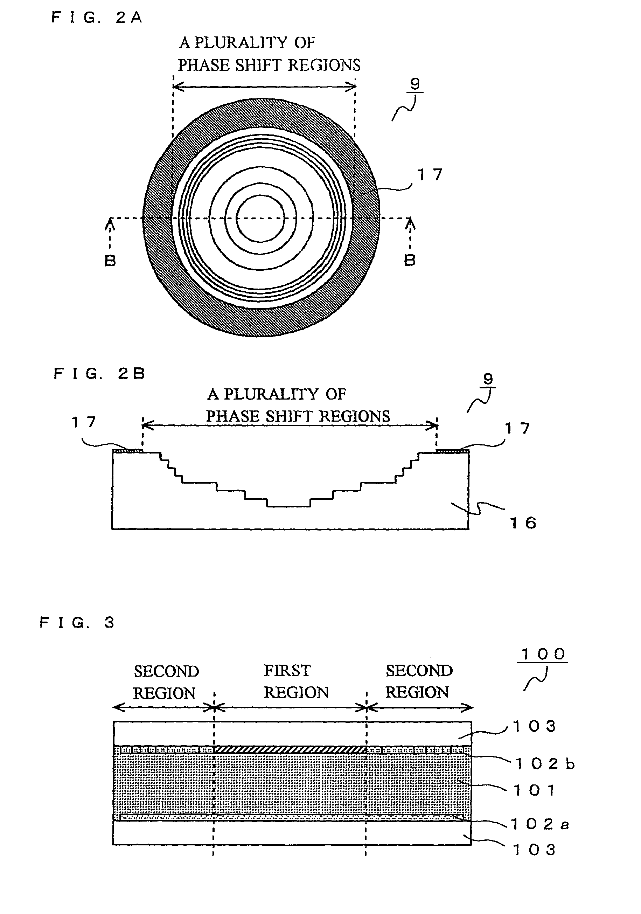

Next, the phase shift element 9 will be explained with reference to Fig. 2A and Fig. 2B. Fig. 2A is a schematic plan view to show structure of the phase shift element 9 and Fig. 2B is a cross sectional view when cut along the line B - B shown in Fig. 2A.

As shown in Fig. 2A in the phase shift element 9 a plurality of phase shift regions are formed in a concentric manner. In these plurality of phase shift regions, stairs-like steps are formed in a transparent base 16 as shown in Fig. 2B, and thickness of the transparent base 16 is adjusted at each step. Therefore, the light beam passing through the phase shift element 9 passes through the transparent base 16 at different time for each phase shift region, thus, change in phase distribution is generated.

A pattern of each phase shift region of this phase shift element 9, i.e., each width and thickness of the transparent base 16, is formed such that the spherical aberration can be compensated whose amount has been surveyed beforehand generated in the light beam for a DVD. Here, it is not convenient that a change is introduced in the phase distribution in the light beam when the light beam for a BD or a CD passes through the phase shift element 9, therefore, amount of the phase shift generated between the adjoining phase shift regions are adjusted to be substantially an integral multiple of the wavelength of each light beam, for example. Because of the arrangement described above, the phase shift element 9 generates the change in phase distribution only on the light beam for a DVD and does not perform any action on the light beams for a BD and a CD.

Further, in the phase shift element 9 a aperture limiting portion 17 is formed in order to perform limitation of aperture on the light beam for a DVD at the outer peripheral side where the phase shift region is not formed. This aperture limiting portion 17 is realized by a structure in which a dichroic mirror that passes through the light beam for a BD and reflects the light beam for a DVD is utilized, a structure in which a diffraction region that diffracts only the light beam for a DVD and passes through the light beam for a BD is formed, or the like, for example. Here, the light beam for a CD may be either performed the limitation of aperture or not.

Though a structure is utilized in which the aperture limiting portion 17 is disposed on the phase shift element 9 in the present embodiment, of course it is no problem another structure is utilized in which a filter for the limitation of aperture is disposed independently from the phase shift element 9.

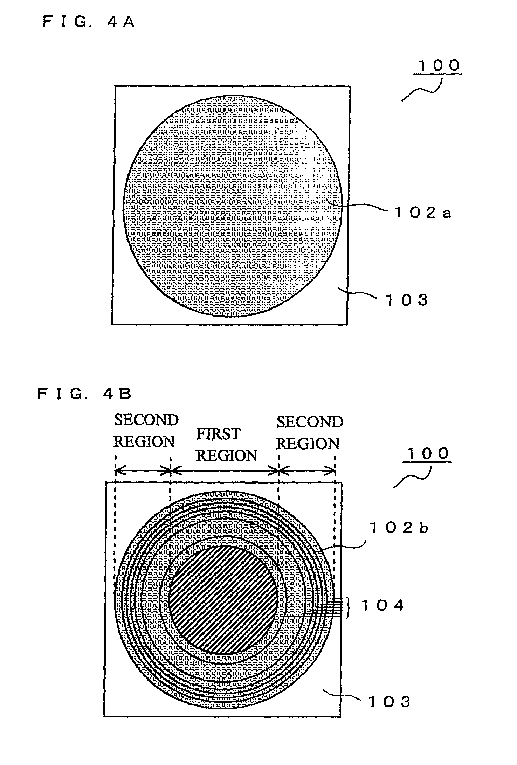

Next, the spherical aberration compensating element 100 will be explained. Fig. 3 is a cross sectional view to show a structure of the spherical aberration compensating element 100 according to the present embodiment. Fig. 4A and Fig. 4B are plan views to show a structure of the spherical aberration compensating element 100 in the present embodiment. Fig. 4A is a drawing of the spherical aberration compensating element shown in Fig. 3 when viewed from below and Fig. 4B is a drawing of the spherical aberration compensating element shown in Fig. 3 when viewed from above. Here, as will be described below, the spherical aberration compensating element 100 in the present embodiment has two regions of the first region and the second region which have different functions, and in Fig. 3 and Fig. 4B a pattern of a second transparent electrode 102b in the first region is shown in an abbreviated form where the detail of it is omitted.

As shown in Fig. 3, Fig. 4A, and Fig. 4B the spherical aberration compensating element 100 in the present embodiment includes liquid crystal 101, a first transparent electrode 102a and the second transparent electrode 102b which are disposed to sandwich the liquid crystal 101, and two transparent bases 103 which are disposed to sandwich a portion that is formed by the liquid crystal 101, and two transparent electrodes 102a, 102b. The liquid crystal 101 is made of nematic liquid crystal or the like, for example, a direction of its orientation is changed when voltages are applied on the transparent electrodes 102a, 102b. The transparent electrode 102a, 102b are made by indium tin oxide (ITO), for example, and have a function to apply voltage to the liquid crystal 101. The transparent base 103 is made of glass, for example, and has a function to support the transparent electrode 102a, 102b.

Among the transparent electrode 102a and 102b, the first transparent electrode 102a is formed by only one electrode to function as a common electrode without having any formed pattern especially shown in Fig.4A. On the other hand, the second transparent electrode 102b has two kinds of electrode patterns whose detail will be described later. As a result, a first region and a second region which perform different functions respectively, are formed on the spherical aberration compensating element 100.

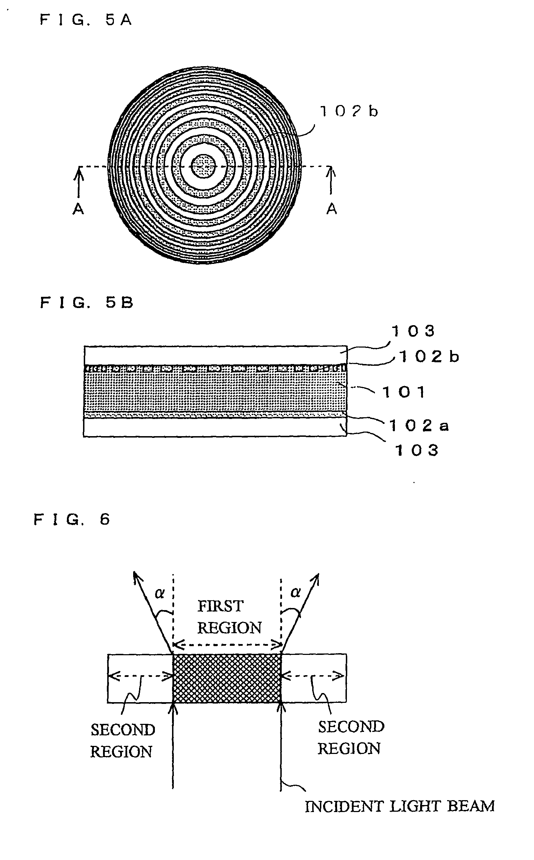

Hereinafter, a structure and action of the spherical aberration compensating element 100 will be described about the first region and the second region respectively. The first region will be described with reference to Fig. 5A and Fig. 5B firstly. Fig. 5A and Fig. 5B are diagrams to show a structure of the first region of the spherical aberration compensating element 100 in the present embodiment, Fig. 5A is a plan view of the first region when viewed from the second transparent electrode 102b side, and Fig. 5B is a cross sectional view when cut along the line A - A shown in Fig. 5A.

As shown in Fig. 5A, an electrode pattern of the second transparent electrode 102b which is disposed in the first region, is made in a concentric interference pattern. The liquid crystal 101 has a uniform refraction index (n0) at all the first region as a whole and it is oriented such that it does not perform any action on the light beam passes through when voltages are not applied between the first transparent electrode 102a and the second transparent electrode 102b.

As a result, the light beam pass through the first region without receiving any action when voltages are not applied between the first transparent electrode 102a and the second transparent electrode 102b. On the other hand, when voltages are applied between them, the liquid crystal 101 (See, Fig. 5B) between the first transparent electrode 102a and the second transparent electrode 102b is changed its orientation direction and the refraction index at the position is changed from n0 to n1. Therefore, portions where the refraction index are n0 and portions where the refraction index are n1 are formed alternately in concentric manner in the first region, the first region diffracts the incident light beam and is enabled to generate divergent rays (for example, +1 order light) as shown in Fig. 6.

Fig. 6 is a schematic diagram to show a situation where a light beam which enters the spherical aberration compensating element 100 according to the present embodiment is diffracted and output as the divergent rays. Though the detailed structure is not shown, the second transparent electrode 102b in the first region is made to be equipotential as a whole and is connected to a drive circuit (not shown) for the spherical aberration compensating element 100 by a single wiring. Further, the first transparent electrode 102a which functions as the common electrode is connected also to the above described drive circuit by a single wiring.

The concentric interference pattern of the second transparent electrode 102b in the first region is formed such that it outputs the divergent rays having a predetermined divergent angle α (See, Fig. 6) when the light beam used for a CD enters. By this arrangement, it becomes possible to compensate the spherical aberration generated in the light beam for a CD.

The concentric interference pattern formed on the second transparent electrode 102b described above is made such that it becomes the same pattern as a pattern which is made by interference on a surface where the second transparent electrode 102b is formed on the transparent base 103, for example, by the light beam for a CD that is emitted from the first light source 2 of the optical pickup device 1 and enters to the spherical aberration compensating element 100 and divergent rays that are output as the divergent rays having a predetermined divergent angle α by the spherical aberration compensating element 100, are condensed on the optical recording medium 15 (CD) by the objective lens 11 then are reflected by the optical recording medium 15 and enters to the spherical aberration compensating element 100 as convergent rays by passing through the objective lens 11.

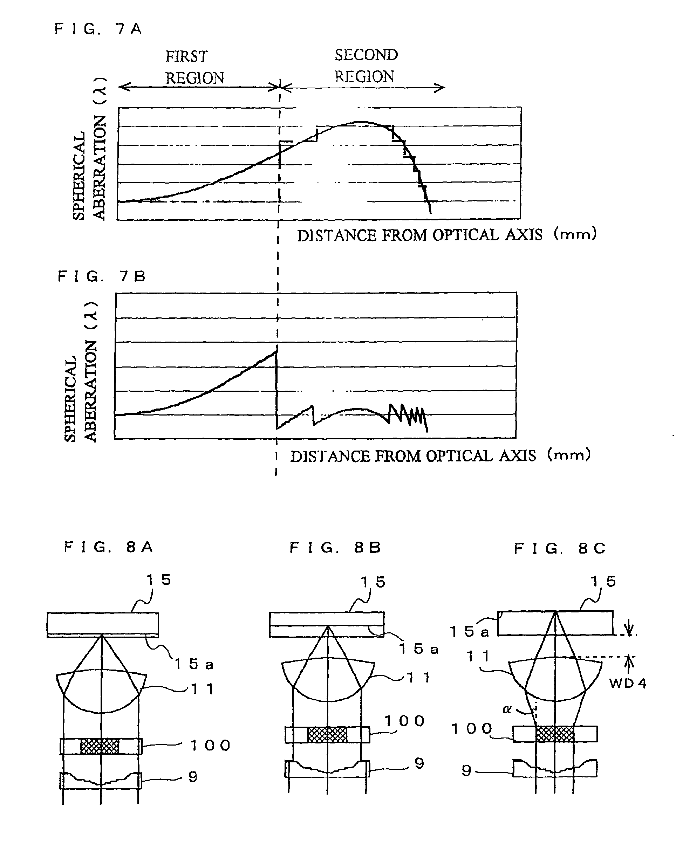

Next, the second region of the spherical aberration compensating element 100 will be described with reference to Fig. 3, Fig. 4A, Fig. 4B, Fig. 7A and Fig. 7B. Here, Fig. 7A and Fig. 7B are explanatory diagrams to explain compensation of the spherical aberration which is performed by the second region of the spherical aberration compensating element 100, though details of it will be described later.

As shown in Fig. 4B the second region is formed such that it surrounds the first region. In the second region, the electrode pattern of the second transparent electrode 102b is formed to have a plurality of concentric regions. Respective concentric regions are made such that they do not contact each other and a portion of black line shown in Fig. 4B corresponds to a space which is formed not to contact. Further in the plurality of regions a plurality of wirings 104 are connected separately such that they can apply potentials independently to the respective plurality of regions. Here, the wirings 104 are connected to the drive circuit (not shown) for the spherical aberration compensating element 100. If there are regions it is enough to which the same potentials are applied always among the plurality of regions, it is no problem to utilize a structure or the like, in which the wirings 104 for these regions to be given the same potential always, are brought together as only one wiring to be connected to the above drive circuit.

In the second region, as well as in the first region, the liquid crystal 101 has a uniform refraction index (n0) at all the second region as a whole and it is made in an orientation such that it does not perform any action on the light beam passes through when voltages are not applied between the first transparent electrode 102a and the second transparent electrode 102b. As a result, the light beam passes through the second region without receiving any action when voltages are not applied between the first transparent electrode 102a and the second transparent electrode 102b. On the other hand, when voltages are applied between them, the liquid crystal 101 between the first transparent electrode 102a and the second transparent electrode 102b (See, Fig. 3) is changed its orientation direction and the refraction index at the position is changed.

In the second region, the second transparent electrode 102b is formed such that it has a plurality of concentric regions as described above, and the transparent electrode 102b can give independently electric potential at respective regions (concentric regions). The voltages which are applied between the first transparent electrode 102a and the second transparent electrode 102b, can be adjusted at the respective concentric regions, therefore, it becomes possible that the refraction index of the liquid crystal 101 is controlled at respective regions (concentric regions).

Fig. 7A shows the spherical aberration generated in the light beam for a BD when a BD is reproduced by the optical pickup device in solid line. As shown in the drawing, the spherical aberration becomes large at the outer peripheral side which is apart from the optical axis. Therefore, it becomes possible that deterioration of reproducing quality by generation of the spherical aberration is suppressed if the large spherical aberration which is generated mainly in the outer peripheral side is compensated. As a result, a number of the regions and their area of the plurality of concentric regions which are formed as a pattern of the second transparent electrode 102b in the second region are designed such that the spherical aberration which becomes large in the outer peripheral side can be compensated.

A phase shift pattern by which the spherical aberration generated in the light beam for a BD is compensated utilizing the plurality of concentric regions whose numbers and area are designed as described above, and adjusting the voltages applied to the respective regions, is a pattern shown in Fig. 7A in dot and dash line. Here, no voltages are applied between the first transparent electrode 102a and the second transparent electrode 102b in the first region. To be accurate, it is necessary that the phase shift pattern generated in the plurality of concentric regions has negative values which are the same in their absolute values as the pattern shown in Fig. 7A, however, they are shown in positive values for the sake of convenience, in Fig. 7A.

Fig. 7B shows result when the phase shift pattern (dot and dash line) is subtracted from the spherical aberration (solid line) shown in Fig. 7A. As understood from the drawing, the spherical aberration can be compensated if the light beam for a BD is compensated such that the phase distribution is changed in a portion corresponding to the second region.

Here, dimensions of the first region and the second region are properly decided in consideration for a situation of occurrence of the spherical aberration or the like which changes depending on an effective diameter of the light beam to be compensated for the spherical aberration at respective regions and design of the objective lens.

In the spherical aberration compensating element 100 in the present embodiment, a structure is employed in which the spherical aberration compensating function is performed in the first region and the second region when voltages are applied to the first transparent electrode 102a and the second transparent electrode 102b. However, the present invention is not limited to this structure and a structure may be possible in which the spherical aberration can be compensated when voltages are not applied to the first transparent electrode 102a and the second transparent electrode 102b and the spherical aberration function is not performed when voltages are applied to the first transparent electrode 102a and the second transparent electrode 102b.

Further, in the present embodiment the first transparent electrode 102a is utilized as the common electrode, however, a structure may be possible also in which the first transparent electrode 102a has the same electrode pattern as the second transparent electrode 102b. In this case, too, the same effect as above described can be obtained.

Operation for reproducing and the like information on a BD, a DVD, or a CD by utilizing the optical pickup device 1 which is structured as above described, will be explained with reference to mainly Fig. 1, Fig. 8A, Fig. 8B, and Fig. 8C. Here, Fig. 8A - Fig. 8C are diagrams to show situations where a light beams are condensed on the optical recording media 15. Fig. 8A shows a case when the optical recording medium 15 is a BD, Fig. 8B shows a case when the optical recording medium 15 is a DVD, and Fig. 8C shows a case when the optical recording medium 15 is a CD.

When the light beam for a BD is emitted from the second light source 3, it passes the second beam splitter 5, the second collimator lens 7, and the dichroic prism 8 in this order and parallel rays enter into the phase shift element 9 as shown in Fig. 8A. Here, the light beam which enters into the phase shift element 9 is performed the limitation of aperture by an aperture that is disposed on a base plate (not shown) of the actuator 12.

As above described because the phase shift element 9 is made to be a structure which does not perform any action on the light beam for a BD, the light beam passes the phase shift element 9 and enters into the spherical aberration compensating element 100. In the spherical aberration compensating element 100, voltages are not applied between the transparent electrodes 102a and 102b in the first region and predetermined voltages are applied between the transparent electrodes 102a and 102b in only the second region when the light beam for a BD enters. By these arrangement, a diffraction function in the first region becomes OFF situation and only a function to control the phase distribution in the second region becomes ON situation. As a result it is enabled to perform compensation of the spherical aberration by changing the phase distribution of the light beam for a BD.

The light beam whose phase distribution is change by the spherical aberration compensating element 100, is condensed on the optical recording medium 15 (BD) by the objective lens 11. The light beam reflected by the optical recording medium 15 passes the same light path as it comes in, enters into the second beam splitter 5, then passes through the second beam splitter 5 and it is condensed on the second photo detector 14.

Though in the above described embodiment a structure is utilized in which the function in the first region is turned OFF when the light beam for a BD enters into the spherical aberration compensating element 100, a structure may be possible in which the compensation of the spherical aberration generated in the light beam for a BD is performed in a situation when the first region is turned on, depending on cases.

When the light beam for a DVD is emitted from the first light source 2, it passes the first beam splitter 4, the first collimator lens 6, and the dichroic prism 8 in this order and parallel rays enter into the phase shift element 9 as shown in Fig. 8B. Here, the light beam which enters into the phase shift element 9 is performed the limitation of aperture by the aperture that is disposed on the base plate (not shown) of the actuator 12.

As above described because the plurality of the phase shift area are formed on the phase shift element 9 in order to compensate the spherical aberration generated in the light beam for a DVD, the light beam for a DVD is performed the compensation of phase. Further, as the aperture limiting portion 17 to limit the aperture on the light beam for a DVD is formed in the phase shift element 9, the light beam for a DVD is performed the limitation of the aperture corresponding to the aperture limiting portion 17.

The light beam on which the phase compensation and the limitation of aperture are performed by the phase shift element 9 enters into the spherical aberration compensating element 100, however, the light beam passes through the element without receiving any action because the functions of the first region and the second region of the spherical aberration compensating element 100 are turned OFF (situation where voltages are not applied between the transparent electrodes 102a, 102b) when the light beam for a DVD enters. In other words, the light beam for a DVD is hardly cut down a light transmittance by the spherical aberration compensating element 100.

The light beam which passed the spherical aberration compensating element 100, is condensed on the optical recording medium 15 (DVD) by the objective lens 11. The light beam reflected by the optical recording medium 15 passes the same light path as it comes in, enters into the first beam splitter 4, then passes through the first beam splitter 4 and it is condensed on the first photo detector 13.

When the light beam for a CD is emitted from the first light source 2, it passes the first beam splitter 4, the first collimator lens 6, and the dichroic prism 8 in this order and parallel rays enter into the phase shift element 9 as shown in Fig. 8C. Here, the light beam which enters into the phase shift element 9 is performed the limitation of aperture by the aperture that is disposed on the base plate (not shown) of the actuator 12.

As above described because the phase shift element 9 is made to be a structure which does not perform any action on the light beam for a CD, the light beam passes the phase shift element 9 and enters into the spherical aberration compensating element 100. In the spherical aberration compensating element 100, voltages are not applied between the transparent electrodes 102a and 102b in the second region and predetermined voltages are applied between the transparent electrodes 102a and 102b in only the first region when the light beam for a CD enters. By these arrangement, the function to control the phase shifting in the second region becomes OFF situation and only the diffraction function in the first region becomes ON situation. As a result the light beam for a CD becomes the divergent rays having a predetermined divergent angle of α by passing the spherical aberration compensating element 100, the spherical aberration which will be generated when it passes the objective lens 11 and reaches the optical recording medium 15 (CD), can be cancelled. The light beam reflected by the optical recording medium 15 passes the same light path as it comes in, enters into the first beam splitter 4, then passes through the first beam splitter 4 and it is condensed on the first photo detector 13.

In this structure the spherical aberration is compensated by means that the light beam which enters the objective lens 11 is changed into the divergent rays. By this arrangement, the working distance WD 4 (See, Fig. 8C) which is length between a tip of the objective lens 11 and the optical recording medium 15 can be enlarged in comparison with the case where the spherical aberration is compensated by changing the phase distribution of the light beam as achieved in the conventional technology (WD4 > WD3; See, Fig. 8C and Fig. 10C). As a result, it becomes possible to reduce the possibility of collision between the objective lens 11 and the optical recording medium 15.

Here, the optical pickup device 1 described above, does not have a structure in which the limitation of aperture which is suitable for the numerical aperture utilized for a CD, is performed for the light beam for a CD. In this case, a component of the light beam in the outer peripheral side becomes a flare component and does not contribute for focusing. However, in the present embodiment as enough quality in reproducing or the like from CD can be secured even in such an occasion, the limitation on aperture is not especially performed because of consideration for increasing in number of parts and the like. Of course, it is no problem that an element performing the limitation of the aperture on the light beam for a CD is disposed separately. Here, in Fig. 8C only a portion of the light beam which corresponds to the effective diameter, is shown for the sake of convenience.

As described above, in the optical pickup device 1 according to the present embodiment the efficiency of optical transmission of the optical pickup device 1 can be improved because the spherical aberration compensating element 100 performs ON - OFF control of its function. In addition, the possibility of collision between the optical recording medium 15 and objective lens 11 can be reduced. Further, the optical pickup device has an effect that the number of parts which is required to perform the compensation of the spherical aberration can be reduced because the spherical aberration compensating element 100 is enabled to compensate the spherical aberration for two kinds of light beams.

In the optical pickup device 1 as described above a structure is employed in which the light beam for a DVD or a CD that enters to the phase shift element 9 is made parallel rays. However, it is no problem that a structure in which the light beam enters as the divergent rays or the like by positional adjustment of the first collimator lens 6, for example. In this case, because there is a possibility of occurrence of the coma aberration, it becomes necessary to pay attention for a divergent angle. It is conceivable to deal the problem by means that tilt adjusting function or the like is provided for the actuator 12 depending on the cases.

In addition, in the optical pickup device 1 described above a structure is employed in which the spherical aberration is compensated utilizing the phase shift element 9 on the light beam for a DVD, the structure of the element performing the spherical aberration (the second aberration compensating element) on the light beam for a DVD is not limited to this. That is, it is no problem that a structure and the like in which a liquid crystal element 200 is utilized to adjust the phase distribution of the light beam passes through by means that one of the transparent electrodes 202 is formed in a electrode pattern that has a plurality of concentric regions as shown in Fig. 9A and Fig. 9B, for example, and orientation of the liquid crystal 201 is adjusted by adjustment of the applied voltages for the respective regions. Here, Fig. 9A and Fig. 9B are diagrams to show one example of variation of the second aberration compensating element, and Fig. 9A is a schematic cross sectional view of the liquid crystal element 200, Fig. 9B is a plan view of the transparent electrode 202 on which the electrode pattern is formed. Further, a structure can be employed in which instead of the phase shift element 9, an expanding lens or the like is utilized, because whose structure is well known, explanation of it is omitted here. However, when the expanding lens is utilized, it is difficult to drive it with the objective lens 11 as one body and there is a possibility for occurrence of the coma aberration. In such a case, it is conceivable to deal the problem by means that tilt adjusting function is provided for the actuator 12, for example.

In the description given above, explanation is described on the optical pickup device which is compatible with a BD, a DVD, and a CD. However, it is no need to say that the present invention can be applicable to the optical pickup device which is compatible with the optical recording media other than described above.

The optical pickup device according to the present invention is very useful because it is compatible with a plurality of kinds of the optical recording media, compensation of the spherical aberration can be performed adequately as well as attaining improvement of the efficiency of optical transmission, suppression in the number of parts, and decrease of possibility of collision between the optical recording medium and the objective lens.

## Claims

1. An optical pickup device comprising:
light sources which emit light beams having wavelengths of λ1, λ2, and λ3 (λ1 > λ2 > λ3);
an objective lens which condenses the light beam emitted from the light source on a recording surface of an optical recording medium;
a first aberration compensating element which is disposed between the light source and the objective lens to perform compensation of spherical aberration generated in the light beam having the wavelength of λ1 and λ3; and
a second aberration compensating element which is disposed between the light source and the objective lens to perform compensation of spherical aberration generated in the light beam having the wavelength of λ2, wherein
the first aberration compensating element has a first region which outputs the light beam having the wavelength of λ1 as divergent rays having a predetermined divergent angle, and a second region which is formed to surround the first region and changes phase distribution of the light beam having the wavelength of λ3 when the light beam having the wavelength of λ3 enters, and the element can electrically control functions that are performed out by the first region and the second region in ON - OFF manner.

2. The optical pickup device according to claim 1, wherein
the first aberration compensating element is composed of a liquid crystal element including a liquid crystal and a first transparent electrode and a second transparent electrode which are disposed to sandwich the liquid crystal,
the first region and the second region are formed by that an electrode pattern formed in at least one of the first transparent electrode and the second transparent electrode is made in two kinds of patterns,
the electrode pattern is a concentric interference pattern in the first region, and the light beam having the wavelength of λ1 is diffracted and output as the divergent rays when voltages are applied between the first transparent electrode and the second transparent electrode, and
the electrode pattern is formed to have a plurality of concentric regions in the second region, adjustment of the applied voltages is made possible between the first transparent electrode and the second transparent electrode at each region of the plurality of regions and the phase distribution of the light beam having the wavelength of λ3 is changed by the adjustment of the applied voltages.

3. The optical pickup device according to claim 1 or 2, wherein the second aberration compensating element has a plurality of phase shift regions to change phase distribution of the light beam having the wavelength of λ2 and does not change the phase distribution of the light beam having the wavelength of λ1 and λ3.

4. The optical pickup device according to claim 3, wherein the second aberration compensating element is made of a transparent member and the plurality of phase shift regions are made by changing thickness of the transparent member in a staircase pattern.

5. The optical pickup device according to any one of claim 1 to claim 4, wherein a function which selectively performs limitation of aperture on the light beam having the wavelength of λ2 is arranged in an outer peripheral side of the second aberration compensating element.

6. The optical pickup device according to any one of claim 1 to claim 5, further comprising an actuator which drives the objective lens at least in focusing direction and tracking direction, wherein the actuator drives the objective lens, the first aberration compensating element, and the second aberration compensating element as one body.
